# EUROPEAN PATENT APPLICATION

(11) **EP 3 590 466 A1**
(43) Date of publication of application: **08.01.2020**
(21) Application number: 18760805.4
(22) Date of filing: 28.02.2018
(51) Int. Cl.: A61C 13/15

(54) **PHOTOPOLYMERIZATION DEVICE AND DENTAL PROSTHESIS MANUFACTURING KIT**

(30) Priority: 28.02.2017 JP 2017036445
(71) Applicant: Tokuyama Dental Corporation, Tokyo 110-0016 (JP)
(72) Inventor: YAMAZAKI, Tatsuya, Tokyo 110-0016 (JP); KAZAMA, Hideki, Tokyo 110-0016 (JP)
(74) Representative: Gulde & Partner
(86) International application number: PCT/JP2018/007512
(87) International publication number: WO 2018/159682

(57) **Abstract**

The present invention provides a photopolymerization device having: a polymerization container; and a body part which is thermally connected to the polymerization container and which is formed by including a light source for applying light to the inside of the polymerization container. The photopolymerization device is characterized by being configured such that heat generated from the light source is guided to the polymerization container side.

## Description

### Technical Field

The present invention relates to a photopolymerization device and a dental prosthesis manufacturing kit. More specifically, the present invention relates to a photopolymerization device used to facilitate a photopolymerization reaction of a preform made of an uncured photocurable material, and a dental prosthesis manufacturing kit configured to include the photopolymerization device.

### Background Art

As the photopolymerization device used to facilitate the photopolymerization reaction of the preform made of the uncured photocurable material, there is a conventionally known photopolymerization device in which a preform is placed in a polymerization container and light is emitted from a light source to the inside of the polymerization container.

Patent Document 1 discloses "a container for photopolymerization including: a container in which a dental prosthesis is placed at the inner side and which is removable; and a light guide portion which penetrates the wall of the container so as to allow light to pass therethrough and which communicates the inside and the outside of the container".

In general, light irradiation is continuously performed from the initiation of photopolymerization to the completion of curing of the molded product. The reaction time from the initiation of photopolymerization to the completion of curing of the molded product is preferably short. In order to shorten the reaction time, it is effective that the temperature in the reaction system is raised to improve the reaction rate.

Patent Literature 2 discloses "a technical photopolymerization device that cures a dental prosthesis by an irradiation light source, the device including an irradiation light source and a heating unit that heats the dental prosthesis".

However, regarding the photopolymerization devices disclosed in Patent Literatures 1 and 2, there is no disclosure about the use of heat generated from the light source.

Generally, the energy conversion efficiency from electricity to light is about from 10 to 15%, and the remaining 80 to 85% is converted to heat or the like. The heat is released outside the photopolymerization device without being utilized.

Patent Literature 3 discloses "a technical photopolymerization device using a light emitting diode as an irradiation light source, where a mounting plate having a heat releasing function is used as the mounting plate on which the light emitting diode is disposed.

It is disclosed that the photopolymerization device disclosed in Patent Literature 3 releases the heat generated from the light source to the outside of the photopolymerization device, but nothing is stated about the utilization of the heat.

### Citation List

### Patent Literature

Patent Literature 1: JP 2012-034838 A
Patent Literature 2: JP 2005-161002 A
Patent Literature 3: JP 2004-237049 A

### Summary of Invention

### Technical Problem

An object of the present invention is to provide a photopolymerization device which has a relatively simple structure, can supply the light energy necessary for the photopolymerization reaction, and can also supply the thermal energy to facilitate the photopolymerization reaction. Another object of the present invention is to provide a dental prosthesis manufacturing kit including the photopolymerization device and a photocurable material.

### Solution to Problem

The present inventors have conducted intensive studies in order to solve the problem. Consequently, they have reconsidered the configuration of the conventional photopolymerization device, and conceived of a method of conducting the thermal energy emitted from the light source intensively to the polymerization container. Then, they have examined the method of conducting the thermal energy, as a result of which they have completed the present invention.

The present invention for solving the above-described problem is as described below. In the present specification, the light emitting diode is abbreviated as LED.
[1] A photopolymerization device including:
   a polymerization container; and
   a body part which is thermally connected to the polymerization container and which is formed by including a light source for irradiating an inside of the polymerization container with light;
   where the photopolymerization device is configured to conduct heat generated from the light source to the polymerization container side.

   The photopolymerization device is configured to include a polymerization container and a body part including a light source, and is configured to prevent the heat generated from the light source at the time of light irradiation from being released from the body part and to conduct the heat to the inside of the polymerization container.
[2] The photopolymerization device according to [1], where at least an outer side surface of the body part is made of a material having a thermal conductivity of 10 (W/m · K) or less.
   In the photopolymerization device, the outer side surface of the body part is made of a material having a low thermal conductivity, thereby preventing the heat generated from the light source at the time of light irradiation from being released from the body part.
[3] The photopolymerization device according to [1], where the polymerization container is made of a material having a thermal conductivity of 50 (W/m · K) or more.
   In the photopolymerization device, the polymerization container is made of a material having a high thermal conductivity, whereby the heat generated from the light source at the time of light irradiation is conducted to the polymerization container side.
[4] The photopolymerization device according to [1], where an inner surface of the polymerization container has a reflectance of 60% or more.
   In the photopolymerization device, the reflectance of the inner surface of the polymerization container is set to a high value in order to efficiently facilitate the photopolymerization reaction.
[5] The photopolymerization device according to [1], where the light source is an LED.
   The photopolymerization device uses an LED as a light source having a long life and a high economic efficiency.
[6] The photopolymerization device according to [1], further including a heat conductive member which thermally connects the light source to the polymerization container.
   In the photopolymerization device, the light source and the polymerization container are thermally connected via a heat conductive member in order to conduct the heat generated from the light source to the inside of the polymerization container.
[7] The photopolymerization device according to [6], where the heat conductive member is made of a material having a thermal conductivity of 50 (W/m · K) or more.
   The photopolymerization device has a heat conductive member having a high thermal conductivity in order to more efficiently conduct the heat generated from the light source to the inside of the polymerization container.
[8] A dental prosthesis manufacturing kit including:
   a photocurable material; and
   the photopolymerization device according to [1].

The dental prosthesis manufacturing kit includes a photocurable material and a photopolymerization device used to cure the photocurable material.

### Advantageous Effects of Invention

Since the photopolymerization device of the present invention raises the temperature in the polymerization container using the heat generated from the light source, whereby the photopolymerization reaction can be facilitated. Therefore, it is possible to shorten the time required to produce the target molded product.

### Brief Description of Drawings

Fig. 1 is an explanatory diagram illustrating a configuration example of a photopolymerization device of the present invention.
Fig. 2 is an explanatory diagram illustrating another configuration example of the photopolymerization device of the present invention.
Fig. 3 is an explanatory diagram illustrating still another configuration example of the photopolymerization device of the present invention.
Fig. 4 is an explanatory diagram illustrating still another configuration example of the photopolymerization device of the present invention.
Fig. 5 is an explanatory diagram illustrating still another configuration example of the photopolymerization device of the present invention.

### Description of Embodiments

Hereinafter, the present invention will be described in detail with reference to the drawings.

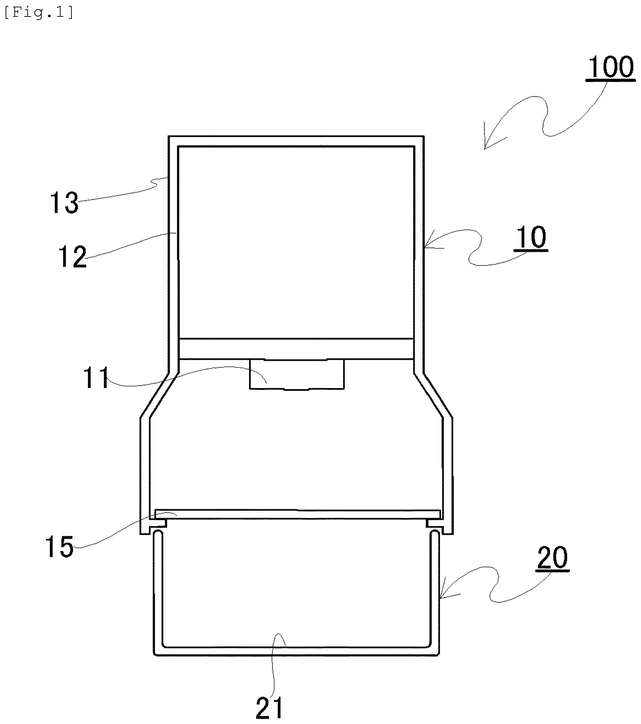

Fig. 1 is an explanatory diagram illustrating a configuration example of a photopolymerization device of the present invention. Fig. 1 illustrates a photopolymerization device 100, a body part 10, and a polymerization container 20. A light source 11 is disposed inside a housing 12 constituting the body part 10. The housing 12 has a bottomed cylindrical shape. One end (the lower end in Fig. 1) of the cylinder is open, and light from the opening is emitted to the inside of the polymerization container 20. The outer side surface of the housing 12 is indicated by a reference sign of 13. A light transmitting plate 15 is made of a light transmissive material, and is disposed so as to cover the opening of the housing 12. The polymerization container 20 has a bottomed cylindrical shape that is open at one end, and a space for accommodating the dental prosthesis is formed inside the polymerization container. The body part 10 is placed on the opening side of the polymerization container 20 and configured to irradiate the inside of the polymerization container 20 with light. The inner surface of the polymerization container 20 is indicated by a reference sign of 21.

In the photopolymerization device, the material constituting at least the outer side surface 13 of the housing 12 is preferably a material whose thermal conductivity is lower than that of the material constituting the polymerization container 20. Thus, the heat generated from the light source 11 is likely to be conducted to the polymerization container 20, and it is possible to rise the temperature in the polymerization container 20. The material constituting the outer side surface 13 preferably has a thickness of 10% or more, more preferably has a thickness of 50% or more, and still more preferably has a thickness of 100%, with respect to the thickness of the material constituting the housing 12. Note that the whole material constituting the housing 12 is more preferably a material whose thermal conductivity is lower than that of the material constituting the polymerization container 20.

The material constituting at least the outer side surface 13 of the housing 12 is preferably a material having a thermal conductivity of 10 (W/m · K) or less at 20°C, more preferably a material having a thermal conductivity of 5 (W/m · K) or less at 20°C, and particularly preferably a material having a thermal conductivity of 1 (W/m · K) or less at 20°C. In a case where the thermal conductivity exceeds 10 (W/m · K), a large amount of heat is released from the outer side surface 13 of the housing 12 and the temperature in the polymerization container 20 is less likely to be raised. The lower limit value of the thermal conductivity is not particularly limited, and is generally 0.01 (W/m · K).

Examples of the above material include various resin materials, inorganic materials such as glass, glass fiber, concrete, alumina, and zirconia, glass fiber reinforced plastics, wood, and paper. Among these materials, the resin materials are preferably used because the industrial mass production is easily achieved. Examples of the resin materials include polypropylene, polyvinyl chloride, polycarbonate, polyethylene terephthalate, acrylonitrile-butadiene-styrene copolymer resin, polybutylene terephthalate, polyoxymethylene, polyurethane, polyamide, polymethyl methacrylate, and polyethylene.

The material constituting the polymerization container 20 is preferably a material having a thermal conductivity of 50 (W/m · K) or more at 20°C, more preferably a material having a thermal conductivity of 100 (W/m · K) or more at 20°C, and particularly preferably a material having a thermal conductivity of 200 (W/m · K) or more at 20°C. In a case where the thermal conductivity is less than 50 (W/m . K), the heat generated from the light source 11 is less likely to be conducted to the polymerization container 20, and the temperature in the polymerization container 20 is less likely to be raised. The upper limit value of the thermal conductivity is not particularly limited, and is generally 2000 (W/m · K). Note that the material having a high thermal conductivity is preferably used for at least a part of the material constituting the polymerization container 20, and is more preferably used for the whole of the material.

Examples of the above material include various metal materials, carbon fibers, and various ceramics. Examples of the metal materials include copper, aluminum, and stainless steel. In a case where carbon fibers are used, the carbon fibers may be directly used, and it is also possible to use a composite material with various resins. Examples of the ceramics include silicon carbide and aluminum nitride.

Further, the outer side surface of the polymerization container 20 may be coated with a material having a low thermal conductivity in order to suppress the heat release from the inside of the container. Examples of the material include the same material as the material constituting the side surface of the housing 12. Further, a coating material having a low thermal conductivity or the like may be applied. Furthermore, the inside of the container made of a material having a low thermal conductivity may be provided, coated, painted or plated with a material having a high thermal conductivity.

Preferably, an inner surface 21 of the polymerization container 20 has high light reflectivity in order to uniformly and efficiently irradiate the molded product with light emitted from the light source 11. In a case where white painting or metal plating is applied to the inner surface 21 in order to impart high light reflectivity to the inner surface 21 or the material constituting the polymerization container is a metal material, it is preferable to subject the inner surface 21 to mirror polishing. The reflectance of visible light on the inner surface of the polymerization container 20 is preferably 60% or more, more preferably 70% or more, and particularly preferably 80% or more.

The inner surface 21 of the polymerization container 20 may be made of a material capable of converting light energy emitted from the light source 11 into thermal energy. The material is, for example, a material obtained by winding polydopamine in a coil shape around an organic nanotube. Further, a part of the inner surface of the polymerization container 20 is preferably made of a light absorptive material.

In order to sufficiently raise the temperature inside the polymerization container 20, the surface area of the inner surface 21 (including the bottom surface) of the polymerization container 20 is preferably 100 cm² or more, and more preferably 150 cm² or more. The surface area is 100 cm² or more, whereby the heat generated from the light source 11 is released to the inside of the polymerization container 20, and it is possible to sufficiently rise the temperature in the polymerization container 20. The upper limit value of the surface area of the inner surface 21 of the polymerization container 20 is not particularly limited, and is generally 1000 cm² or less. The amount of heat released to the inner side of the polymerization container 20 is preferably configured to be larger than the amount of heat released to the outer side of the polymerization container. The amount is more preferably 1.1 times or more, and still more preferably 1.5 times or more. With such a configuration, the heat generated from the light source 11 is released intensively to the inside of the polymerization container 20, whereby it possible to raise the temperature in the polymerization container 20 and prevent the heat from being released from the outer side of the polymerization container 20. In order to provide a difference in heat release between the inner side and outer side of the polymerization container 20, for example, there are a method of coating the outer side of the polymerization container 20 with a material having a low thermal conductivity and a method of providing unevenness or the like on the inner surface 21 of the polymerization container 20 and making the surface area larger than the surface area of the outer surface.

The internal volume of the polymerization container 20 is preferably 3000 cm³ or less, and more preferably 300 cm³ or less. The internal volume is 3000 cm³ or less, whereby it is possible to sufficiently raise the temperature in the polymerization container 20. In a case where the internal volume exceeds 3000 cm³, the internal volume of the polymerization container 20 is too large, and the temperature inside the container is less likely to be raised. The lower limit value of the internal volume of the polymerization container 20 is not particularly limited, and is preferably 100 cm³ or more in order to accommodate various dental prostheses.

The polymerization container 20 is configured such that the temperature inside the container is raised, preferably by 5°C or more, more preferably by 7°C or more, still more preferably by 7 to 20°C, when irradiated with light from the light source 11 for 3 minutes. Such a configuration can be achieved by appropriately adjusting the kind and number of the light source 11, the material and internal volume of the housing 12, the material and internal volume of the polymerization container 20, and the surface area of the inner surface 21.

The difference in thermal conductivity between the material constituting the outer side surface 13 of the housing 12 and the material constituting the polymerization container 20 is preferably 50 (W/m · K) or more, more preferably 100 (W/m) or more, and particularly preferably 200 (W/m · K) or more. The difference in thermal conductivity is 50 (W/m · K) or more, so that the heat generated from the light source 11 can be easily conducted to the polymerization container 20 side. Note that the thermal conductivity of the material constituting the polymerization container 20 is the thermal conductivity of the material which has the highest thermal conductivity among the materials constituting the polymerization container 20. In other words, as in the case of a container whose outer side surface is coated with a material having a low thermal conductivity; or in the case of a container in which the inside of the container made of a material having a low thermal conductivity is provided, coated, painted or plated with a material having a high thermal conductivity, in a case where the polymerization container 20 is made of a plurality of materials, the thermal conductivity means a thermal conductivity of a material having the highest thermal conductivity.

A conventionally known light source can be used as the light source 11. The light source is not particularly limited, and examples thereof include incandescent lamps, fluorescent lamps, LEDs, high-intensity discharge lamps, and sun lamps. In particular, it is preferable to use a low cost and long life LED. Preferably, the light source 11 has a cooling member for releasing the heat generated from the light source 11.

In the photopolymerization device 100, a preform made of an uncured photocurable material is accommodated in the polymerization container 20, the body part is placed on the polymerization container 20, and then light is emitted from the light source 11. Thus, the light energy necessary for the photopolymerization reaction of the photocurable material is supplied to the preform in the polymerization container 20. Further, the heat generated from the light source 11 is conducted to the polymerization container 20, and thus the temperature in the polymerization container 20 rises, thereby facilitating the photopolymerization reaction.

The light transmitting plate 15 is not particularly limited, and examples thereof include a plate-like object made of glass, plastic or the like, a lens, and a net-like object made of plastic, metal or the like. The light transmitting plate 15 does not necessarily need to airtightly divide the light source 11 side and the polymerization container 20 side. For example, in the case of using a plate-like object or a lens, a through hole or a slit may be formed in the thickness direction of the plate or the lens.

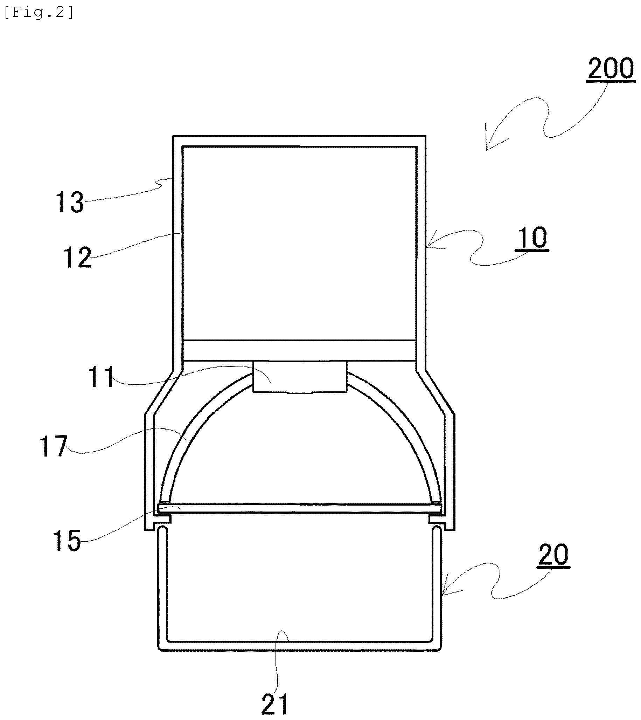

Fig. 2 is an explanatory diagram illustrating another configuration example of the photopolymerization device of the present invention. The same configurations as in Fig. 1 are assigned the same reference signs and descriptions thereof will be omitted. In Fig. 2, one end side of a heat conductive member 17 is joined to the light source 11, and the other end side extends to the opening side of the housing 12, i.e., the polymerization container 20 side.

The heat conductive member 17 has a role of conducting the heat generated from the light source 11 to the polymerization container 20 side. In the case of providing the heat conductive member, the thermal conductivity of the material constituting the housing 12 and the polymerization container 20 is not limited, and the housing 12 and the polymerization container 20 can be made of arbitrary materials. The heat conductive member 17 does not need to be physically joined to the light source 11 and the polymerization container 20, and may be thermally connected thereto. In order to efficiently conduct the heat generated from the light source 11, it is preferable that the heat conductive member 17 is physically joined to at least the light source 11. In a case where the heat conductive member 17 is physically joined to the light source 11, if the light source 11 has a cooling member, the heat conductive member can be directly joined to the cooling member. Further, if the light source 11 does not have the cooling member, the heat conductive member can be joined to the metal portion of the substrate of the light source 11 via an insulating material.

The heat conductive member 17 can be made of the same material as that described above for the polymerization container. The shape of the heat conductive member 17 is not particularly limited, and the member can be configured to have various shapes such as linear, rod-like, hemispherical, and tapered shapes. The heat conductive member 17 may have a function as a reflecting plate by increasing the reflectance of the inner surface.

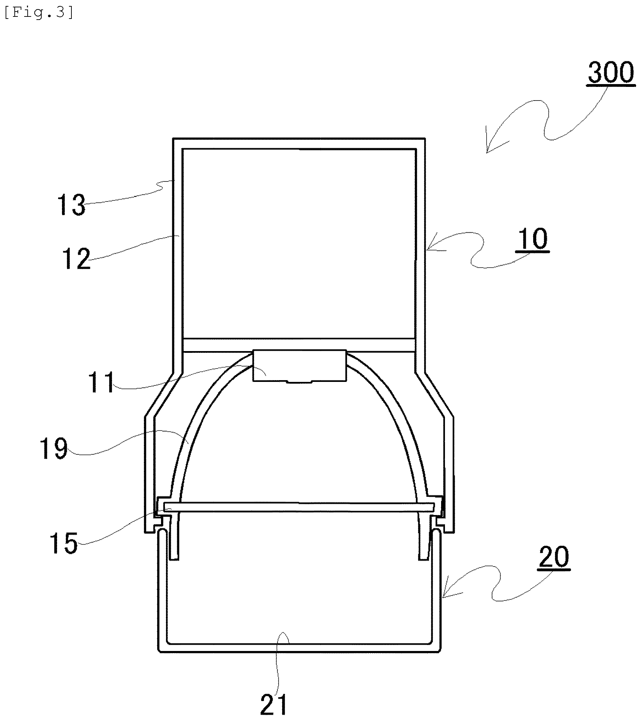

Fig. 3 is an explanatory diagram illustrating still another configuration example of the photopolymerization device of the present invention. The same configurations as in Fig. 2 are assigned the same reference signs and descriptions thereof will be omitted. In Fig. 3, one end side of a heat conductive member 19 is joined to the light source 11, and the other end side extends to the inside of the polymerization container 20 along the outer edge of the light transmitting plate 15. Examples of the method of extending the other end side of the heat conductive member 19 to the inside of the polymerization container 20 include a method of forming a through hole or a slit in the light transmitting plate 15 and allowing the heat conductive member 19 to penetrate the through hole or slit and a method of allowing the heat conductive member 19 to be along the outer edge of the light transmitting plate 15. The extension is performed in such a manner, so that the light source 11 and the polymerization container 20 can be physically connected by the heat conductive member 19 and the thermal conduction properties can be further increased.

The end side of the heat conductive member 19 is extended to the inside of the polymerization container 20, so that the heat generated from the light source 11 can be conducted to the inside of the polymerization container 20 more efficiently than the device illustrated in Fig. 2. The size of the heat conductive member 19 which is extended to the inside of the polymerization container 20 is not particularly limited. As described above, the polymerization container is configured such that the temperature inside the container is raised, preferably by 5°C or more, more preferably by 7°C or more, still more preferably by 7 to 20°C, when irradiated with light from the light source 11 for 3 minutes.

In addition to the above-described configurations of the photopolymerization device of the present invention, known configurations can be added. For example, the light transmitting plate 15 may be configured to be removable. Further, the distance between the light source 11 and the bottom surface of the polymerization container 20 may be changed depending on the size of the molded product placed inside the polymerization container 20.

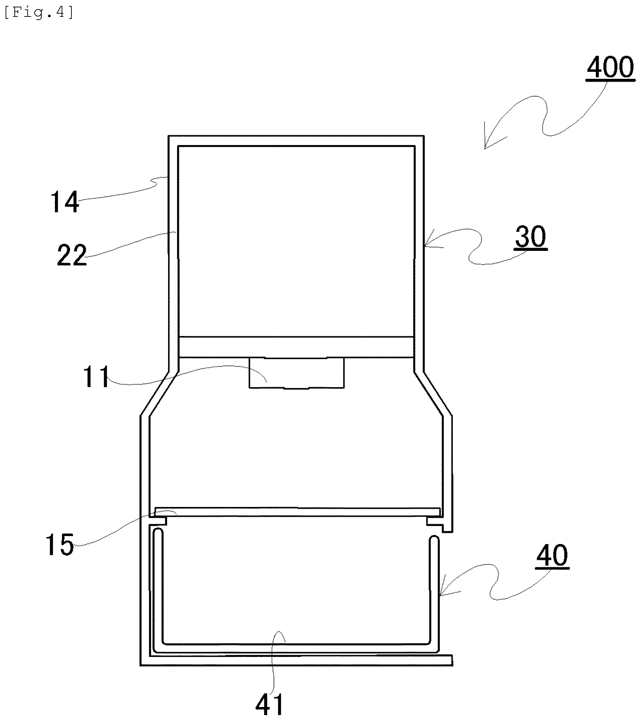

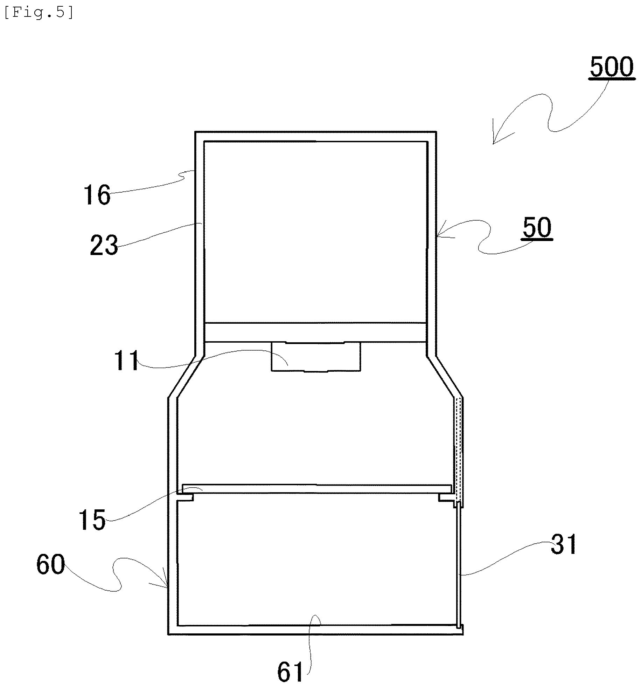

The arrangement of the body part including the polymerization container and the light source is not particularly limited. As illustrated in Figs. 1 to 3, the polymerization container may be disposed at the lower part and the body part may be disposed at the upper part, or the body part may be configured to be disposed at the lower part so as to emit light upward and the polymerization container may be disposed at the upper part. Further, the body and the polymerization container may have not only a cylindrical shape, but also any shape as long as the effects of the present invention are not impaired. Further, the body and the polymerization container may be configured to be divided into upward and downward directions, and also may be configured such that a polymerization container 40 is accommodated as a drawer in a housing 22 of a body part 30 as illustrated in Fig. 4. Furthermore, as illustrated in Fig. 5, a housing 23 of a body part 50 and a polymerization container 60 may be integrated. In this case, the housing 23 and the polymerization container 60 may be formed of different materials and integrated, or an inner surface 61 of the polymerization container 60 may be plated to change the thermal conductivity. In a case where the housing 23 and the polymerization container 60 are integrated, the bottom of the polymerization container may be opened for taking in and out of the molded product. As illustrated in Fig. 5, a door 31 may be provided in the housing of the body part or a part of the polymerization container.

Various sensors such as a temperature sensor and an illuminance sensor may be provided in the body part or the polymerization container to control the temperature and the illuminance.

In order to prevent the overheating of the light source, a cooling member such as a heat sink may be attached to the substrate on which the light source is attached. The material of the heat sink is not particularly limited, and known materials such as aluminum can be used. Further, a hole penetrating inside and outside may be provided in the housing of the body in order to control the temperature inside the body. Furthermore, a fan may be attached to the inside of the body such that the temperature inside the body is controlled by blowing heated air to the polymerization container side or exhausting the air to the outside.

The dental prosthesis manufacturing kit of the present invention is configured to include a photocurable material and the photopolymerization device.

As the photocurable material, a known photocurable material that contains a radical polymerizable monomer (A) and a photopolymerization initiator (B) as described below can be used without particular limitation. Further, the photocurable material may contain a filler (C) and other components, if necessary.

### [Radical Polymerizable Monomer (A)]

As the radical polymerizable monomer to be added to the curable composition, a radical polymerizable monomer usable for dental use can be used without particular limitation. As the radical polymerizable monomer, a (meth)acrylic polymerizable monomer is generally used.

Examples of representative (meth)acrylic polymerizable monomers include those shown in the following (I) to (IV).

### (I) Monofunctional Monomers

Acidic group-containing polymerizable monomers such as methacrylates such as methyl methacrylate, ethyl methacrylate, isopropyl methacrylate, hydroxyethyl methacrylate, tetrahydrofurfuryl methacrylate, acetoacetoxyethyl methacrylate, glycidyl methacrylate and acrylates corresponding to these methacrylates; acrylic acid, methacrylic acid, p-methacryloyloxybenzoic acid, N-2-hydroxy-3-methacryloyloxypropyl-N-phenylglycine, 4-methacryloyloxyethyl trimellitic acid and its anhydride, 6-methacryloyloxyhexamethylene malonic acid, 10-methacryloyloxydecamethylene malonic acid, 2-methacryloyloxyethyl dihydrogen phosphate, 10-methacryloyloxydecamethylene dihydrogen phosphate, and 2-hydroxyethyl hydrogenphenyl phosphonate.

### (II) Difunctional Monomers

### (i) Aromatic Compound-Based Monomers

2,2-bis(methacryloyloxyphenyl)propane, 2,2-bis[4-(3-methacryloyloxy)-2-hydroxypropoxyphenyl]propane, 2,2-bis(4-methacryloyloxyphenyl)propane, 2,2-bis(4-methacryloyloxypolyethoxyphenyl)propane, 2,2-bis(4-methacryloyloxydiethoxyphenyl)propane), 2,2-bis(4-methacryloyloxytetraethoxyphenyl)propane, 2,2-bis(4-methacryloyloxypentaethoxyphenyl)propane, 2,2-bis(4-methacryloyloxydipropoxyphenyl)propane, 2(4-methacryloyloxydiethoxyphenyl)-2(4-methacryloyloxydiethoxyphenyl)propane, 2(4-methacryloyloxydiethoxyphenyl)-2(4-methacryloyloxyditriethoxyphenyl)propane, 2(4-methacryloyloxydipropoxyphenyl)-2-(4-methacryloyloxytriethoxyphenyl)propane, 2,2-bis(4-methacryloyloxypropoxyphenyl)propane, 2,2-bis(4-methacryloyloxyisopropoxyphenyl)propane, and acrylates corresponding to these methacrylates; diadducts obtainable from addition of vinyl monomers having an -OH group, such as methacrylates such as 2-hydroxyethyl methacrylate, 2-hydroxypropyl methacrylate, and 3-chloro-2-hydroxypropyl methacrylate, or acrylates corresponding to these methacrylates, and diisocyanate compounds having an aromatic group, such as diisocyanate methylbenzene and 4,4'-diphenylmethane diisocyanate.

### (ii) Aliphatic Compound-Based Monomers

Acidic group-containing polymerizable monomers such as monoethylene glycol dimethacrylate, diethylene glycol dimethacrylate, triethylene glycol dimethacrylate, dimethacrylate of polyethylene glycol having an average molecular weight of 400, polyethylene glycol dimethacrylate having an average molecular weight of 600, butylene glycol dimethacrylate, neopentyl glycol dimethacrylate, propylene glycol dimethacrylate 1,3-butanediol dimethacrylate, 1,4-butanediol dimethacrylate, 1,6-hexanediol dimethacrylate, nonamethylene diol methacrylate, and acrylates corresponding to these methacrylates;
diadducts obtainable from addition of vinyl monomers having -OH group, such as methacrylates such as 2-hydroxyethyl methacrylate, 2-hydroxypropyl methacrylate, 3-chloro-2-hydroxypropyl methacrylate, or acrylates corresponding to these methacrylates, and diisocyanate compounds such as hexamethylene diisocyanate, trimethylhexamethylene diisocyanate, diisocyanate methylcyclohexane, isophorone diisocyanate, and methylenebis(4-cyclohexylisocyanate);
acrylic anhydride, methacrylic anhydride, 1,2-bis(3-methacryloyloxy-2-hydroxypropoxy)ethyl, and
2-hydroxyethyl hydrogenphenyl phosphonate.

### (III) Trifunctional Monomers

Methacrylates such as trimethylolpropane trimethacrylate, trimethylolethane trimethacrylate, pentaerythritol trimethacrylate, trimethylolmethane trimethacrylate, and acrylates corresponding to these methacrylates and the like.

### (IV) Tetrafunctional Monomers

Pentaerythritol tetramethacrylate, pentaerythritol tetraacrylate; and diadducts obtainable from addition of diisocyanate compounds such as diisocyanate methylbenzene, diisocyanate methylcyclohexane, isophorone diisocyanate, hexamethylene diisocyanate, trimethylhexamethylene diisocyanate, methylenebis(4-cyclohexylisocyanate), 4,4-diphenylmethane diisocyanate or tolylene-2,4-diisocyanate, and glycidol dimethacrylate, and the like.

These polymerizable monomers may be used singly, or in combination of two or more kinds thereof. Note that, regarding the curable composition, in addition to the (meth)acrylic polymerizable monomer, polymerizable monomers other than the (meth)acrylic polymerizable monomer can be mixed for polymerization, in order to make polymerization easy, adjust the viscosity or adjust other physical properties.

Examples of these other polymerizable monomers include fumaric acid esters such as monomethyl fumarate, diethyl fumarate, and diphenyl fumarate; styrene or α-methylstyrene derivatives such as styrene, divinylbenzene, α-methylstyrene, and α-methylstyrene; and allyl compounds such as diallyl terephthalate, diallyl phthalate, and diallyl diglycol carbonate. These other polymerizable monomers may be used singly, or in combination of two or more kinds thereof.

### [Photopolymerization Initiator (B)]

As the photopolymerization initiator, any known photopolymerization initiator can be used without limitation. Examples of the photopolymerization initiator that is suitably used include acyl phosphine oxide derivatives such as 2,4,6-trimethyl benzoyl diphenyl phosphine oxide, 2,6-dimethoxy benzoyl diphenyl phosphine oxide, 2,6-dichloro benzoyl diphenyl phosphine oxide, 2,4,6-trimethyl benzoyl phenyl phosphinic acid methyl ester, 2-methyl benzoyl diphenyl phosphine oxide, pivaloylphenyl phosphinic acid isopropyl ester, bis-(2,6-dichlorobenzoyl)phenyl phosphine oxide, bis-(2,6-dichlorobenzoyl)-2,5-dimethylphenyl phosphine oxide, bis-(2,6-dichlorobenzoyl)-4-propylphenyl phosphine oxide, bis-(2,6-dichlorobenzoyl)-1-naphthyl phosphine oxide, bis-(2,6-dimethoxybenzoyl)phenyl phosphine oxide, bis-(2,6-dimethoxybenzoyl)-2,4,4-trimethylpentyl phosphine oxide, bis-(2,6-dimethoxybenzoyl)-2,5-dimethylphenyl phosphine oxide, bis-(2,4,6-trimethyl benzoyl)phenyl phosphine oxide, bis-(2,5,6-trimethylbenzoyl)-2,4,4-trimethylpentyl phosphine oxide; α-diketones such as diacetyl, acetylbenzoyl, benzyl, 2,3-pentadione, 2,3-octadione, 4,4'-dimethoxybenzyl, 4,4'-oxybenzyl, camphor quinone, 9,10-phenanthrenequinone, and acenaphthenequinone; benzoin alkyl ethers such as benzoin methyl ether, benzoin ethyl ether, and benzoin propyl ether; thioxanthone derivatives such as 2,4-diethoxythioxanthone, 2-chlorothioxanthone, and methylthioxanthone; and benzophenone derivatives such as benzophenone, p,p'-dimethylamino benzophenone, and p,p'-methoxybenzophenone.

These photopolymerization initiators may be used singly, or in combination of two or more kinds thereof. Among the photopolymerization initiators, α-diketones are preferable in terms of good polymerization activity, the less harmful to the living body, and the like. Further, in the case of using an α-diketone, it is preferably used in combination with a tertiary amine compound. Examples of the tertiary amine compound that can be used in combination with an α-diketone include N,N-dimethylaniline, N,N-diethylaniline, N,N-di-n-butylaniline, N,N-dibenzylaniline, N,N-dimethyl-p-toluidine, N,N-diethyl-p-toluidine, N,N-dimethyl-m-toluidine, p-bromo-N,N-dimethylaniline, m-chloro-N,N-dimethylaniline, p-dimethylaminobenzaldehyde, p-dimethylaminoacetophenone, p-dimethylaminobenzoic acid, p-dimethylaminobenzoic acid ethyl ester, p-dimethylaminobenzoic acid amyl ester, N,N-dimethylanthranilic acid methyl ester, N,N-dihydroxyethyl aniline, N,N-dihydroxyethyl-p-toluidine, p-dimethylaminophenethyl alcohol, p-dimethylaminostilbene, N,N-dimethyl-3,5-xylidine, 4-dimethylaminopyridine, N,N-dimethyl-α-naphthylamine, N,N-dimethyl-β-naphthylamine, tributylamine, tripropylamine, triethylamine, N-methyldiethanolamine, N-ethyldiethanolamine, N,N-dimethylhexylamine, N,N-dimethyldodecylamine, N,N-dimethylstearylamine, N,N-dimethylaminoethyl methacrylate, N,N-diethylaminoethyl methacrylate, and 2,2'-(n-butylimino)diethanol.

These polymerization initiators may be used singly, or in combination of two or more kinds thereof.

In the present invention, the compounding amount of the radical polymerization initiator is not particularly limited as long as it is an amount to polymerize the radical polymerizable monomer to cure the curable composition. The compounding amount may be appropriately selected from known compounding amounts depending on the kind of the polymerization initiator or the radical polymerizable monomer to be used. Generally, the amount of the photopolymerization initiator (B) is from 0.01 to 10 parts by mass, preferably from 0.05 to 8 parts by mass, and more preferably from 0.1 to 6 parts by mass, with respect to 100 parts by mass of the radical polymerizable monomer (A). However, in a case where a radical polymerizable compound is used as one component of the polymerization initiator, as in the case of the acidic group-containing radical polymerizable monomer, it is preferable to set the amount of components constituting the polymerization initiator other than the compound in the above range.

### [Filler (C)]

The curable composition can be used as a surface lubricant or an adhesive which is used for the purpose of imparting lubricity to the surface of various resin-based dental materials, whitening of teeth, repair of discolored teeth, and the like. The composition is used in combination with the filler, so that it can be used in a wider range of applications. Here, a known organic or inorganic filler can be used as the filler. In the case of using in combination with the organic filler, it is suitably used as a material for producing a repair material for artificial dentures, a hard denture lining material, a temporary sealing material and a temporary crown which are filled in the cavity for several days from the time when a patient returns home in the course of treatment until the time when the treatment is resumed and a bridge. Further, in the case of using in combination with an inorganic filler, it is suitably used as a dental restorative material, such as composite resin, hard resin, inlay, onlay or crown.

Specific examples of fillers which are representative fillers to be suitably used include, as an organic filler, polymer particles such as polymethyl methacrylate, polyethyl methacrylate, a methyl methacrylate-ethyl methacrylate copolymer, crosslinked polymethyl methacrylate, crosslinked polyethyl methacrylate an ethylene-vinyl acetate copolymer, a styrene-butadiene copolymer, an acrylonitrile-styrene copolymer, and an acrylonitrile-styrene-butadiene copolymer. These fillers may be used singly, or in combination of two or more kinds thereof.

Further, specific examples of representative inorganic fillers include inorganic particles such as quartz, silica, alumina, silica-titania, silica-zirconia, lanthanum glass, barium glass, and strontium glass. Furthermore, examples of the cation-eluting filler among the inorganic fillers include hydroxides such as calcium hydroxide and strontium hydroxide; and oxides such as zinc oxide, silicate glass, and fluoroaluminosilicate glass. These fillers may be used singly, or in combination of two or more kinds thereof.

Further, there are some cases in which a granular organic-inorganic composite filler obtained by adding a polymerizable monomer to these inorganic fillers in advance to form a paste, and then polymerizing and pulverizing the paste is used.

The particle size of the fillers is not particularly limited, and a filler having an average particle size of 0.01 to 100 µm, which is generally used as a dental material, can be appropriately used according to the purpose. Further, the refractive index of the filler is not particularly limited, and the refractive indices of general dental fillers (in the range of 1.4 to 1.7) can be used without limitation.

Furthermore, among the above-described fillers, a spherical inorganic filler is used, whereby the surface lubricity of the resulting cured product is increased and the product can be an excellent restorative material.

Desirably, the inorganic filler is treated with a surface preparation agent represented by a silane coupling agent in order to improve the compatibility with the polymerizable monomer and to improve the mechanical strength and the water resistance. The surface treatment may be carried out by a known method. Methyltrimethoxysilane, methyltriethoxysilane, methyltrichlorosilane, dimethyldichlorosilane, trimethylchlorosilane, vinyltrichlorosilane, vinyltriethoxysilane, vinyltris(β-methoxyethoxy)silane, γ-methacryloyloxypropyltrimethoxysilane, γ-chloropropyltrimethoxysilane, γ-glycidoxypropyltrimethoxysilane, hexamethyldisilazane or the like is preferably used as the silane coupling agent.

The proportion of each of the fillers may be appropriately determined according to the intended use in consideration of the viscosity (operability) when mixed with the radical polymerizable monomer (A) or the mechanical/physical properties of the cured product. Generally, the proportion is from 50 to 1500 parts by mass, and preferably from 70 to 1000 parts by mass, with respect to 100 parts by mass of the radical polymerizable monomer (A) .

Regarding the curable composition of the present invention, arbitrary components such as the radical polymerizable monomer (A), the photopolymerization initiator (B), and the filler (C) to be blended as needed are uniformly mixed at the time of use and the mixture is cured. Here, the uniform state may be not only a state in which all the components are dissolved alternately, but also a state in which the components are emulsified or a state in which an insoluble component such as a filler is dispersed, and may be the degree that the phase separation or the like cannot be confirmed with the naked eye.

The curable composition is usually used at 4 to 60°C. The curing time is usually 1 to 30 minutes for the chemical polymerization type and 3 to 120 seconds for the photopolymerization type.

Usually, a part of the surface of the dental curable composition is cured in a state exposed to an atmosphere containing oxygen. In order to reduce the unpolymerized surface, an air barrier material may be applied to the dental curable composition for polymerization, or the dental curable composition may be immersed in water for polymerization.

Further, the dental curable composition may be divided into two or more and packaged until immediately before use, in consideration of storage stability and the like. There is exemplified an aspect in which a liquid material containing the radical polymerizable monomer (A) is kneaded immediately before use and then used. At least one of the powder or the liquid material contains the photopolymerization initiator (B). The powder preferably contains the filler (C). The inside of the package is preferably replaced by vacuum or an inert gas.

The curable composition may be produced according to a known method, and is not particularly limited.

Other arbitrary components may be added to the curable composition, and known components can be added without limitation as long as physical properties are not impaired. For example, a catalyst for heat polymerization such as an azo compound or peroxide may be added to enhance the polymerization activity by heat. Further, a coloring material such as a pigment or a fluorescent pigment may be blended in order to match the color tone of teeth and gums, or an ultraviolet absorber may be added in order to prevent discoloration due to UV light. Furthermore, it is also preferable to add a polymerization inhibitor in order to improve storage stability.

In addition, the curable composition can be used not only in dental applications such as hard denture lining materials but also in general industry.

### Examples

Subsequently, the present invention will be specifically described with reference to Examples; however, the present invention is not limited to the following Examples. The compounds used in Examples and Comparative Examples, abbreviations of the compounds, and a method of evaluating physical properties are shown below.

### (Photocurable Material)

- Organic filler: PEMA; polyethyl methacrylate (average particle size: 30 µm)
- Polymerization initiator: CQ; camphor quinone
- Polymerizable monomer: ND; 1,9-nonamethylene diol dimethacrylate
- Polymerization co-catalyst: DMBE; ethyl dimethyl benzoate

### (Preparation of Photocurable Material)

200 parts by mass of PEMA as an organic filler and 0.5 parts by mass of CQ as a polymerization initiator were weighed and mixed for 3 hours using a rocking mixer to obtain a powder. 100 parts by mass of ND as a polymerizable monomer and 0.5 parts by mass of DMBE as a polymerization co-catalyst were weighed and stirred for mixing for 3 hours to obtain a liquid material.

### [Method of Measuring Knoop Hardness]

2.0 g of photocurable material powder and 1.0 g of liquid material were kneaded into a paste, and then the paste was filled into a polyacetal mold having a circular hole with an inner diameter of 30 mm and a thickness of 1.5 mm, and both surfaces of the mold were covered by a transparent PP film and pressed. Then, the paste was cured by light irradiation for 3 minutes using the photopolymerization device described below. The Knoop hardness (test force: 0.1 kgf, holding time: 20 seconds) of the light irradiated surface of the cured product was determined using a hardness tester.

### (Example 1)

The photopolymerization device illustrated in Fig. 1 was formed. Polybutylene terephthalate (thermal conductivity: 0.22 W/m · K) was used as the housing of the body part. Ten 1.1 W high-power LEDs (white light) having heat dissipation substrates made of aluminum were used as the light source. The used light transmitting plate was made of glass having a thickness of 1.7 mm (thermal conductivity: 0.55 W/m · K). An aluminum container (thermal conductivity: 237 W/m · K) whose inner surface was painted white was used (reflectance: 70%) as the polymerization container. A lithium ion battery (3000 mAh, 3.7 V) was used as a power source. The photopolymerization device was used to measure the temperature in the polymerization container after light irradiation for 3 minutes. The temperature at the inner bottom of the polymerization container was raised from 20°C to 25°C.

The Knoop hardness of the photocurable material cured using the photopolymerization device was measured, and as a result, it was 7.2.

### (Example 2)

The photopolymerization device illustrated in Fig. 3 was formed. Polybutylene terephthalate was used as the housing of the body part. Ten 1.1 W high-power LEDs (white light) having heat dissipation substrates made of aluminum were used as the light source. One end of a heat conductive member made of aluminum was connected to each of the aluminum heat dissipation substrates, and the other end was disposed in the polymerization container. The used light transmitting plate was made of glass having a thickness of 1.7 mm. An aluminum container whose inner surface was painted white was used (reflectance: 70%) as the polymerization container. A lithium ion battery (3000 mAh, 3.7 V) was used as a power source. The photopolymerization device was used to measure the temperature in the polymerization container after light irradiation for 3 minutes. The temperature at the inner bottom of the polymerization container was raised from 20°C to 27°C.

The Knoop hardness of the photocurable material cured using the photopolymerization device was measured, and as a result, it was 7.7.

### (Example 3)

The photopolymerization device illustrated in Fig. 3 was formed. Polybutylene terephthalate was used as the housing of the body part. Ten 1.1 W high-power LEDs (white light) having heat dissipation substrates made of aluminum were used as the light source. One end of a heat conductive member made of aluminum was connected to each of the aluminum heat dissipation substrates, and the other end was disposed in the polymerization container. The volume of the heat conductive member disposed inside the polymerization container was 2763 mm³ (thickness 1 mm × depth 10 mm × diameter 88 mm (circumference: 276.3 mm)). The used light transmitting plate was made of glass having a thickness of 1.7 mm. A polybutylene terephthalate container whose inner surface was mirror-finished by aluminum plating was used as the polymerization container (reflectance 88%). A lithium ion battery (3000 mAh, 3.7 V) was used as a power source. The photopolymerization device was used to measure the temperature in the polymerization container after light irradiation for 3 minutes. The temperature at the inner bottom of the polymerization container was raised from 20°C to 28°C.

The Knoop hardness of the photocurable material cured using the photopolymerization device was measured, and as a result, it was 7.8.

### (Example 4)

The photopolymerization device was formed in the same manner as in Example 3 except that a 1 W blue LED (peak wavelength: 470 nm) was used as the LED light source. The photopolymerization device was used to measure the temperature in the polymerization container after light irradiation for 3 minutes. The temperature at the inner bottom of the polymerization container was raised from 20°C to 28°C.

The Knoop hardness of the photocurable material cured using the photopolymerization device was measured, and as a result, it was 9.2.

### (Example 5)

The photopolymerization device illustrated in Fig. 1 was formed. Polybutylene terephthalate was used as the housing of the body part. Ten 5 W blue LEDs (peak wavelength: 470 nm) having aluminum heat dissipation substrates were used as the light sources. The used light transmitting plate was made of glass having a thickness of 1.7 mm. A polybutylene terephthalate container whose inner surface was mirror-finished by aluminum plating (thermal conductivity: 237 W/m · K) was used as the polymerization container (reflectance: 88%). The used power source was a switching power source, and it was set to 1 A and 31 V. The photopolymerization device was used to measure the temperature in the polymerization container after light irradiation for 3 minutes. The temperature at the inner bottom of the polymerization container was raised from 20°C to 24°C.

The Knoop hardness of the photocurable material cured using the photopolymerization device was measured, and as a result, it was 9.4.

### (Example 6)

A photopolymerization device was formed in the same manner as in Example 1 except that an acrylonitrile-butadiene-styrene copolymer resin (thermal conductivity: 0.33 W/m · K) was used for the housing of the body part. The photopolymerization device was used to measure the temperature in the polymerization container after light irradiation for 3 minutes. The temperature at the inner bottom of the polymerization container was raised from 20°C to 25°C.

The Knoop hardness of the photocurable material cured using the photopolymerization device was measured, and as a result, it was 7.2.

### (Example 7)

A photopolymerization device was formed in the same manner as in Example 1 except that polypropylene (thermal conductivity: 0.12 W/m · K) was used for the housing of the body part. The photopolymerization device was used to measure the temperature in the polymerization container after light irradiation for 3 minutes. The temperature at the inner bottom of the polymerization container was raised from 20°C to 25°C.

The Knoop hardness of the photocurable material cured using the photopolymerization device was measured, and as a result, it was 7.3.

### (Example 8)

A photopolymerization device was formed in the same manner as in Example 1 except that polycarbonate (thermal conductivity: 0.19 W/m · K) was used for the housing of the body part. The photopolymerization device was used to measure the temperature in the polymerization container after light irradiation for 3 minutes. The temperature at the inner bottom of the polymerization container was raised from 20°C to 25°C.

The Knoop hardness of the photocurable material cured using the photopolymerization device was measured, and as a result, it was 7.2.

### (Example 9)

A photopolymerization device was formed in the same manner as in Example 1 except that soda glass (thermal conductivity: 0.74 W/m · K) was used for the housing of the body part. The photopolymerization device was used to measure the temperature in the polymerization container after light irradiation for 3 minutes. The temperature at the inner bottom of the polymerization container was raised from 20°C to 25°C.

The Knoop hardness of the photocurable material cured using the photopolymerization device was measured, and as a result, it was 7.1.

### (Example 10)

A photopolymerization device was formed in the same manner as in Example 1 except that high thermal conductivity polycarbonate TPN2131 (manufactured by Mitsubishi Engineering-Plastics Corporation, thermal conductivity: 4.9 W/m · K) was used for the housing of the body part. The photopolymerization device was used to measure the temperature in the polymerization container after light irradiation for 3 minutes. The temperature at the inner bottom of the polymerization container was raised from 20°C to 24°C.

The Knoop hardness of the photocurable material cured using the photopolymerization device was measured, and as a result, it was 7.0.

### (Example 11)

A photopolymerization device was formed in the same manner as in Example 1 except that high thermal conductivity polycarbonate TPN1122 (manufactured by Mitsubishi Engineering-Plastics Corporation, thermal conductivity: 8.8 W/m · K) was used for the housing of the body part. The photopolymerization device was used to measure the temperature in the polymerization container after light irradiation for 3 minutes. The temperature at the inner bottom of the polymerization container was raised from 20°C to 24°C.

The Knoop hardness of the photocurable material cured using the photopolymerization device was measured, and as a result, it was 6.8.

### (Example 12)

A photopolymerization device was formed in the same manner as in Example 1 except that a brass container (thermal conductivity: 106 W/m · K, reflectance: 70%) whose inner surface was painted white was used as the polymerization container. The photopolymerization device was used to measure the temperature in the polymerization container after light irradiation for 3 minutes. The temperature at the inner bottom of the polymerization container was raised from 20°C to 24°C.

The Knoop hardness of the photocurable material cured using the photopolymerization device was measured, and as a result, it was 7.1.

### (Example 13)

A photopolymerization device was formed in the same manner as in Example 1 except that a carbon steel (carbon content: 0.5%) container (thermal conductivity: 54 W/m · K, reflectance: 70%) whose inner surface was painted white was used as the polymerization container. The photopolymerization device was used to measure the temperature in the polymerization container after light irradiation for 3 minutes. The temperature at the inner bottom of the polymerization container was raised from 20°C to 24°C.

The Knoop hardness of the photocurable material cured using the photopolymerization device was measured, and as a result, it was 6.9.

### (Example 14)

A photopolymerization device was formed in the same manner as in Example 1 except that an aluminum container (reflectance: 62%) whose inner surface was chromium-plated (thermal conductivity: 94 W/m · K) was used as the polymerization container. The photopolymerization device was used to measure the temperature in the polymerization container after light irradiation for 3 minutes. The temperature at the inner bottom of the polymerization container was raised from 20°C to 25°C.

The Knoop hardness of the photocurable material cured using the photopolymerization device was measured, and as a result, it was 6.8.

### (Comparative Example 1)

The photopolymerization device illustrated in Fig. 1 was formed. Aluminum was used for the housing of the body part. Ten 1.1 W high-power LEDs (white light) having heat dissipation substrates made of aluminum were used as the light source. The used light transmitting plate was made of glass having a thickness of 1.7 mm. An aluminum container whose inner surface was painted white was used (reflectance: 70%) as the polymerization container. A lithium ion battery (3000 mAh, 3.7 V) was used as a power source. The photopolymerization device was used to measure the temperature in the polymerization container after light irradiation for 3 minutes. The temperature at the inner bottom of the polymerization container was raised from 20°C to 23°C.

The Knoop hardness of the photocurable material cured using the photopolymerization device was measured, and as a result, it was 6.4.

### Reference Signs List

- 100, 200, 300, 400, 500: Photopolymerization device
- 10, 30, 50: Body part
- 11: Light source
- 12, 22, 23: Housing
- 13, 14, 16: Outer side surface of housing
- 15: Light transmitting plate
- 17, 19: Heat conductive member
- 20, 40, 60: Polymerization container
- 21, 41, 61: Inner surface of polymerization container
- 31: Door

## Claims

1. A photopolymerization device comprising:
a polymerization container; and
a body part which is thermally connected to the polymerization container and which is formed by including a light source for irradiating an inside of the polymerization container with light;
wherein the photopolymerization device is configured to conduct heat generated from the light source to the polymerization container side.

2. The photopolymerization device according to claim 1, wherein at least an outer side surface of the body part is made of a material having a thermal conductivity of 10 (W/m · K) or less.

3. The photopolymerization device according to claim 1, wherein the polymerization container is made of a material having a thermal conductivity of 50 (W/m · K) or more.

4. The photopolymerization device according to claim 1, wherein an inner surface of the polymerization container has a reflectance of 60% or more.

5. The photopolymerization device according to claim 1, wherein the light source is an LED.

6. The photopolymerization device according to claim 1, further comprising a heat conductive member which thermally connects the light source to the polymerization container.

7. The photopolymerization device according to claim 6, wherein the heat conductive member is made of a material having a thermal conductivity of 50 (W/m · K) or more.

8. A dental prosthesis manufacturing kit comprising:
a photocurable material; and
the photopolymerization device according to claim 1.
